# EUROPÄISCHE PATENTSCHRIFT

(11) **EP 2 064 949 B1**
(45) Veröffentlichungstag und Bekanntmachung des Hinweises auf die Patenterteilung: **07.03.2012**
(21) Anmeldenummer: 08020587.5
(22) Anmeldetag: 27.11.2008
(51) Int. Cl.: A01M 23/08, A01G 13/10, A01M 29/30, A01G 1/08

(54) **System zur Abwehr von Kleinsäugern**
System for protection against small mammals
Système destiné à repousser des petits mammifères

(30) Priorität: 28.11.2007 DE 102007057244
(43) Veröffentlichungstag der Anmeldung: 03.06.2009
(73) Patentinhaber: Walther, Bernd, 48329 Havixbeck (DE); Fülling, Olaf, Dr., 47239 Duisburg (DE)
(72) Erfinder: Walther, Bernd, 48329 Havixbeck (DE); Fülling, Olaf, Dr., 47239 Duisburg (DE)
(74) Vertreter: Röther, Peter

(56) Entgegenhaltungen:
- DE-A1- 3 023 309
- DE-A1- 19 542 089
- DE-U1- 20 109 683
- GB-A- 2 373 428
- GB-A- 2 397 020

## Beschreibung

Die Erfindung betrifft ein System zur Abwehr von Kleinsäugern, beispielsweise Wühlmäusen, aus landwirtschaftlich oder gartenbaulich genutzten Bereichen.

Um derartige Bereiche in der Landwirtschaft oder im Gartenbau vor beispielsweise Wühlmäusen oder Ratten zu schützen und ihnen das Eindringen in diese Bereiche zu verwehren, werden beispielsweise Zäune aufgestellt, die 30 bis 40 cm tief in die Erde hinein ragen, um den Tieren das Unterqueren zu erschweren.

Diese fest installierten und tief eingegrabenen Zäune haben neben dem Nachteil des arbeitsintensiven Aufbaus den weiteren Nachteil, dass sie bei Veränderungen in der Anbaufläche nur in umständlicher Art und Weise versetzt werden können.

Darüber hinaus wird neben dem Versuch, den Nagern den Zugang zu den oben angesprochenen Bereichen zu verwehren auch versucht, die Populationsdichte der Kleinsäuger möglichst gering zu halten. Hierzu ist bereits vorgeschlagen worden (DE 195 42 089 A1), neben den zu schützenden Bereichen wannenartige Gebilde aufzustellen, die in einer Seitenwand eine Zugangsöffnung aufweisen, die eventuell mit einer nur in Zugangsrichtung zu öffnenden Klappe versehen sind aber nach oben hin offen ausgestaltet sind.

Gelangt ein Tier nun in diese Wanne hinein, ist keine Möglichkeit gegeben, wieder aus dieser Wanne herauszukommen, da die Seitenwände so hoch sind, dass ein Überqueren bzw. Hochklettern unmöglich ist. Die in derartigen Fallen sitzenden Kleinsäuger können dann von jagenden Tieren wie Greifvögeln, Füchsen oder Katzen gegriffen werden.

Darüber hinaus ist aus der GB 2 373 428 A eine Fallenvorrichtung für insbesondere Schnecken dargestellt, die eine Art Zaun bildet, welche aus einzelnen Seamentabschnitten zusammengesetzt wird.

Diese Segmente sind kompliziert im Aufbau und müssen ins Erdreich eingegraben werden, so dass ein anschließendes Versetzen mit großen Schwierigkeiten verbunden ist. Darüber hinaus sollen die Schnecken durch diese Falle angelockt werden, um in ihr vernichtet zu werden.

Der Erfindung liegt die Aufgabe zugrunde, mit einem einzigen System sowohl den Absperreffekt eines Zaunes als auch den Fangeffekt einer Falle miteinander zu kombinieren.

Die Erfindung löst diese Aufgabe mit einem System, welches aus einer einer Art Zaun bildenden, nach oben offenen Rinne zusammengesetzten Segmenten besteht, mit je einer Bodenplatte und von dieser Bodenplatte seitlich aufsteigenden Wänden, wobei zumindest in der dem zu schützenden Bereich abgewandten Seitenwand eine Einlassöffnung vorgesehen ist, wobei die einzelnen Segmente aus Kunststoffplatten zusammengesteckt sind.

Die hintereinander miteinander verbundenen Segmente bilden somit eine Absperrung und zum anderen durch den rinnenartigen Aufbau auch eine Falle.

Soll ein derartiges System versetzt werden, ist der Ab- und Wiederaufbau völlig unproblematisch und mit erheblich weniger Arbeit verbunden als beim Setzen eines Zaunes.

Die Einlassöffnungen in den Segmenten können wie oben beschrieben mit einer nur in Einlassrichtung öffnenden Klappe verschließbar sein, so dass die Tiere in die Rinne hinein kommen aber nicht wieder heraus.

Aus Tierschutzgründen ist es jedoch in manchen Ländern gewünscht, dass eine Möglichkeit für die Tiere gegeben ist, auch wieder aus der Rinne heraus zu gelangen, da diese ansonsten verhungern würden, wenn sie nicht zwischenzeitlich von den jagenden Tieren gegriffen worden sind.

Diesem Tierschutzaspekt kommt die Erfahrung zugute, dass die Tiere in der Regel nicht durch die Einlassöffnung wieder heraus finden, durch die sie hinein gelangt sind. Erfahrungsgemäß suchen die Tiere an der der Einlassöffnung gegenüber liegenden Wand eine Auslassöffnung (in Richtung zu schützender Bereich), und wenn sie hier keine Auslassöffnung finden, bewegen sie sich an dieser Wand entlang, so dass zum einen die Jagdtiere die Möglichkeit haben in dieser Zeit den Kleinsäuger zu fassen, dieser aber auch die Möglichkeit hat, nach einer gewissen Zeit doch wieder eine der Einlassöffnungen zu finden und die Rinne zu verlassen.

Bei einer bevorzugten Ausführungsform der Erfindung ist vorgesehen, dass das System bzw. jedes Segment aus zusammensteckbaren Platten besteht, wobei in den Seitenwänden Aufnahmeöffnungen für zu diesen Aufnahmeöffnungen komplementäre Steckelemente an den Seitenrändern der Bodenplatte vorgesehen sind.

Die Herstellung derartiger Platten ist im Gegensatz zur Herstellung eines rinnenförmigen Segmentes aus einem Stück wesentlich einfacher, dazu auch die Lagerhaltung und der Transport.

Durch einfaches Zusammenstecken aus einem Bodenteil und zwei Seitenteilen wird ein Segment erstellt, wonach dieses Segment mit anderen gleichartig aufgebauten aneinander gereiht wird.

Dabei ist erfindungsgemäß vorgesehen, dass in den Seitenwänden die Aufnahmeöffnungen in mehreren Reihen übereinander angeordnet sind.

Hierdurch wird die Möglichkeit eröffnet, ein Segment zu schaffen, das leicht in x-y-Richtung verschiebbar ist.

Durch Nutzung einer darüber angeordneten Aufnahmeöffnungsreihe reichen die Seitenwände nach unten über die Bodenplatte vor, so dass diese in den Boden eingesteckt werden können.

Eine weitere Möglichkeit ergibt sich, indem beispielsweise die Bodenplatte auf der zum zu schützenden Bereich liegenden Seite in die untere Aufnahmeöffnungsreihe der Seitenwand eingesteckt wird, während die Bodenplatte auf der entgegen gesetzten Seite in eine höhere Aufnahmeöffnungsreihe der Seitenwand eingesteckt wird. Hierdurch ist gewährleistet, dass auf der Einlassöffnungsseite die Seitenwand tiefer in den Boden hinein reicht als auf der entgegengesetzten Seite. Somit wird auch ein unterirdischer Absperreffekt erreicht.

Vorteilhafterweise sind die Segmente aus Kunststoffplatten zusammengesteckt, was zum einen eine preiswerte Herstellung ermöglicht und zum anderen den Vorteil mit sich bringt, das derartige Segmente nicht so schnell verrotten.

Durch geschicktes Zusammenstecken können auch mit den drei bislang beschriebenen Segmentteilen Eckbereiche erzeugt werden. Um das System jedoch zu komplettieren, ist gemäß Anspruch 6 vorgesehen, dass zur Bildung derartiger Eckbereiche jeweils eine quadratische Bodenplatte mit im rechten Winkel aneinander stoßenden Seitenwänden vorgesehen sind.

Wenn das System den zu schützenden Bereich nicht vollständig umschließen soll (wenn beispielsweise bereits eine Mauer vorhanden ist) sind zusätzliche Stirnelemente zum Abschluss der Rinne vorgesehen.
Obwohl die verschiedensten Möglichkeiten denkbar sind, die einzelnen Segmente miteinander zu verbinden, ist gemäß Anspruch 7 vorgesehen, dass die rinnenförmigen Segmente über Nut-/Feder-Verbindungen aneinander steckbar sind.

Derartige Nut-/Feder-Verbindungen können bei den im Anspruch 5 vorgeschlagenen Kunststoffplatten beim Herstellungsprozess gleich mit eingeformt werden.

Die Erfindung wird im folgenden anhand von Zeichnungen dargestellt und erläutert.

Es zeigen:
- Fig. 1: Zu einem Zaun angeordnetes erfindungsgemäßes System in abgebrochener Darstellung
- Fig. 2: Einzelsegment des Systems
- Fig. 3: a bis c Zusammensteckalternativen für die Segmente

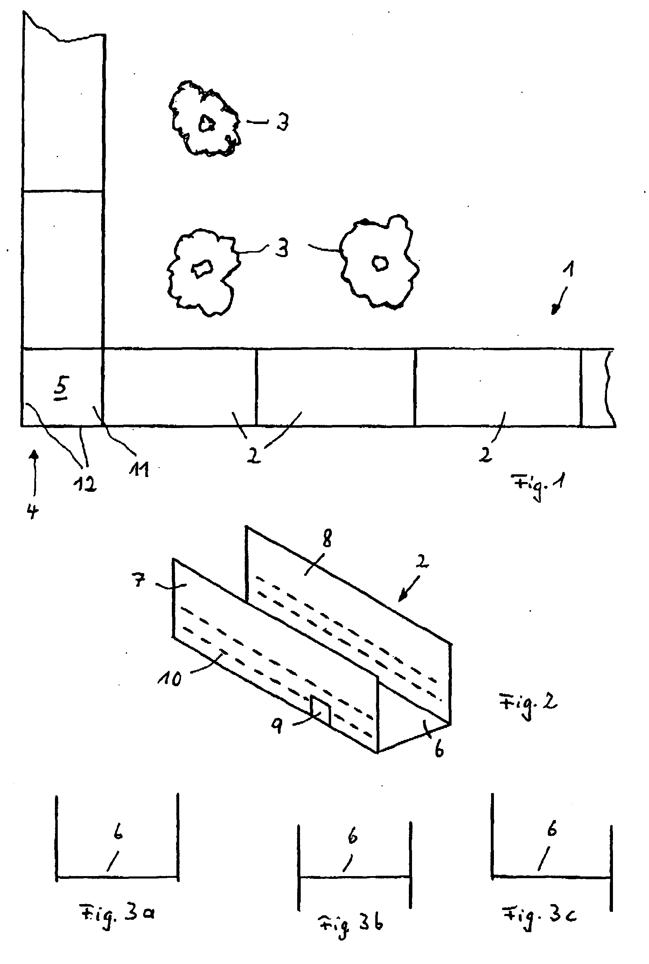

In der Figur 1 ist ein System zur Abwehr von Kleinsäugern, beispielsweise Wühlmäusen, aus landwirtschaftlich oder gartenbaulich genutzten Bereichen dargestellt und allgemein mit dem Bezugzeichen 1 versehen. Dieses System 1 besteht aus einzelnen Segmenten 2, die zu einem zaunartigen Gebilde aneinander gereiht sind. Dieses zaunartige, aus den Segmenten 2 bestehende Gebilde umschließt eine gartenbauliche Fläche, die durch einzelne Bäume 3 angedeutet ist.

Am Eckbereich 4, wo die Segmente 2 im rechten Winkel aneinander stoßen, ist ein Eckteil 5 vorgesehen.

Das Eckteil 5 besteht aus einer quadratischen Bodenplatte 11 und im rechten Winkel aneinander stoßenden Seitenteilen 12.

Die einzelnen Segmente 2 und auch das Eckteil 5 sind beispielsweise mittels Nut-/Feder-Verbindung miteinander befestigt.

Ein Segment 2 ist in perspektivischer Darstellung in der Figur 2 dargestellt.

Es besteht aus einer Bodenplatte 6 und zwei im rechten Winkel von der Bodenplatte 6 aufsteigenden Seitenwänden 7 bzw. 8.

In der Seitenwand 7 ist eine Eingangsöffnung 9 vorgesehen, die durch eine nicht dargestellte und nur in einer Richtung zu öffnende Klappe verschließbar ist, die aber auch ohne eine derartige Klappe ausgestaltet sein kann.

Die Bodenplatte 6 ist mit den Seitenplatten 7 und 8 über Steckverbindungen zusammenmontiert.

In der Figur 2 ist der Zustand dargestellt, der auch in Figur 3a dargestellt ist. Hierbei sind die an den Seitenrändern der Bodenplatte 6 vorgesehenen Zapfen (nicht dargestellt) in eine Reihe entsprechender Aufnahmeöffnungen eingesteckt.

Wie aus Figur 2 hervorgeht, sind mehrere solcher Reihen Aufnahmeöffnungen 10 im Abstand zueinander vorgesehen. Dabei ist es wichtig, dass die oberste Reihe so weit vom oberen Rand weg ist, dass diese Aufnahmeöffnungen 10 nicht als Kletterhilfen für die im Segment 2 gefangenen Tiere dienen können.

Beim Zusammenbau der aus Kunststoffplatten bestehenden Segmente 2 ist wie in Figur 2 und in Figur 3a dargestellt die Möglichkeit gegeben, das Segment lediglich auf dem Untergrund abzustellen, so dass auch ein nachträgliches Verrücken und Verschieben noch möglich ist.

In der Figur 3b ist dargestellt, dass die Seitenplatten 7, 8 über die Bodenplatte 6 nach unten vorstehen, so dass ein derartiges Segment ein wenig in den Boden eingedrückt werden kann.

In der Figur 3c schließlich ist dargestellt, dass eine der Seitenplatten, entweder 7 oder 8, weiter nach unten über die Bodenplatte 6 vorragen kann, während die gegenüberliegende im Zustand gemäß Figur 3a verbleibt.

Auf diese Weise erhält eine derartig aufgebaute Zaunfalle einen zusätzlichen unterirdischen Absperreffekt.

## Patentansprüche

1. System (1) zur Abwehr von Kleinsäugern, beispielsweise Wühlmäusen, aus landwirtschaftlich oder gartenbaulich genutzten Bereichen, bestehend aus zu einer eine Art Zaun bildenden, nach oben offenen Rinne zusammengesetzten Segmenten (2) mit je einer Bodenplatte (6), welche auf dem Erdboden aufliegt, und von dieser Bodenplatte (6) seitlich aufsteigenden Wänden (7, 8), wobei zumindest in der dem zu schützenden Bereich abgewandten Seitenwand (7) eine Einlassöffnung (9) vorgesehen ist, wobei die einzelnen Segmente (2) aus Kunststoffplatten zusammengesteckt sind.

2. System nach Anspruch 1,
**dadurch gekennzeichnet,**
**dass** die Einlassöffnungen (9) durch jeweils eine nur in Einlassrichtung öffnende Klappe verschließbar sind.

3. System nach Anspruch 1 oder 2,
**dadurch gekennzeichnet,**
**dass** jedes Segment (2) aus zusammensteckbaren Platten (6, 7, 8) besteht, wobei in den Seitenwänden (7, 8) Aufnahmeöffnungen (10) für zu diesen Aufnahmeöffnungen (10) komplementäre Steckelemente an den Seitenrändern der Bodenplatte (6) vorgesehen sind.

4. System nach Anspruch 3,
**dadurch gekennzeichnet,**
**dass** in den Seitenwänden (7, 8) die Aufnahmeöffnungen (10) in mehreren Reihen übereinander angeordnet sind.

5. System nach einem der Ansprüche 1 bis 4,
**dadurch gekennzeichnet,**
**dass** zur Bildung von Eckbereichen (4) jeweils eine quadratische Bodenplatte (10) mit im rechten Winkel aneinander stoßenden Seitenwänden (12) vorgesehen sind.

6. System nach einem der Ansprüche 1 bis 5,
**dadurch gekennzeichnet,**
**dass** die rinnenförmigen Segmente (2) über Nut/Feder-Verbindungen aneinander steckbar sind.

## Claims

1. System (1) to keep small mammals, for example voles, out of areas used for farming or as gardens, consisting of segments (2) assembled together to form a gutter that is open towards a top and form a type of fence, where each segment comprises walls (7, 8) that rise laterally from a base plate (6) which rests on the ground, whereby an inlet opening (9) is provided at least in the side wall (7) that faces away from the area to be protected, whereby the individual segments (2) are assembled from plastic plates.

2. System in accordance with claim 1, **characterised in that**, the inlet openings (9) can each be closed off by a flap opening in the inlet direction only.

3. System in accordance with claim 1 or 2, **characterised in that**, each segment (2) consists of plates (6, 7, 8) that can be inserted into each other, whereby accommodation openings (10) are provided in the side walls (7, 8) to receive insertion elements complementary to the accommodation openings (10) on the lateral edges of the base plate (6).

4. System in accordance with claim 3, **characterised in that**, in the side walls (7, 8) the accommodation openings (10) are arranged in several rows one above the other.

5. System in accordance with one of claims 1 to 4, **characterised in that**, a square base plate (10) with side walls (12) abutting each other to form a right angle is provided to form each of the corner regions (4).

6. System in accordance with one of claims 1 to 5, **characterised in that**, the gutter-shaped segments (2) can be inserted into each other by means of tongue and groove connections.

## Revendications

1. Système (1) pour repousser de petits mammifères, par exemple des campagnols, hors de zones agricoles ou horticoles, constitué de segments (2) assemblés pour former une gouttière ouverte vers le haut et formant une sorte de clôture, chacun segment comportant une plaque de fond (6) posée sur le sol et des parois (7, 8) qui s'élèvent latéralement à partir de cette plaque de fond (6), dans lequel une ouverture d'entrée (9) est prévue au moins dans la paroi latérale (7) opposée à la zone à protéger, dans lequel les segments individuels (2) sont assemblés à partir de plaques en matière plastique.

2. Système selon la revendication 1, **caractérisé en ce que** les ouvertures d'entrée (9) peuvent respectivement être obturées par une trappe qui s'ouvre seulement dans la direction d'entrée.

3. Système selon la revendication 1 ou 2, **caractérisé en ce que** chaque segment (2) est constitué de plaques pouvant être assemblées (6, 7, 8), des ouvertures de réception (10) étant prévues dans les parois latérales (7, 8) pour des éléments de fixation complémentaires à ces ouvertures de réception (10) et agencés sur les bords latéraux de la plaque de fond (6).

4. Système selon la revendication 3, **caractérisé en ce que** les ouvertures de réception (10) sont disposées en plusieurs rangées les unes au-dessus des autres dans les parois latérales (7, 8).

5. Système selon l'une quelconque des revendications 1 à 4, **caractérisé en ce qu'**une plaque de fond carrée (10) ayant des parois latérales (12) en butée l'une contre l'autre à angle droit est respectivement prévue pour former des zones de coin (4).

6. Système selon l'une quelconque des revendications 1 à 5, **caractérisé en ce que** les segments en forme de gouttière (2) peuvent être fixés les uns aux autres par des liaisons rainure/languette.
